# EUROPÄISCHE PATENTSCHRIFT

(11) **EP 1 067 460 B1**
(45) Veröffentlichungstag und Bekanntmachung des Hinweises auf die Patenterteilung: **12.12.2001**
(21) Anmeldenummer: 99107058.2
(22) Anmeldetag: 10.04.1999
(51) Int. Cl.: G06F 12/16, G11B 7/013, G11B 19/04, G11B 20/00, G11B 20/10, G11B 20/12, G11B 27/28, G06F 9/06, G06F 9/445

(54) **Datenträger mit wiederherstellbarem Basisdatengrundzustand und Verfahren zu dessen Herstellung**
Recording carrier with recoverable initial state base data and process for its production
Support de données avec des données restaurables de base à l'état initial et procédé pour sa fabrication

(43) Veröffentlichungstag der Anmeldung: 10.01.2001
(73) Patentinhaber: Basis GmbH EDV-Vertriebs-Gesellschaft, 47533 Kleve (DE)
(72) Erfinder: Duwe, Arno, 46487 Wesel-Büderich (DE); Fox, Gregor, 47574 Goch (DE); Koenen, Erwin, 47574 Goch (DE); Schouten, Heinz, 47551 Bedburg-Hau (DE)
(74) Vertreter: Stenger, Watzke & Ring Patentanwälte

(56) Entgegenhaltungen:
- EP-A- 0 382 528
- WO-A-98/59296
- PATENT ABSTRACTS OF JAPAN vol. 095, no. 006, 31. Juli 1995 (1995-07-31) & JP 07 065302 A (HITACHI LTD), 10. März 1995 (1995-03-10)

## Beschreibung

Die vorliegende Erfindung betrifft ein Verfahren zur Herstellung eines Datenträgers mit einem wiederherstellbaren Basisdatengrundzustand. Weiterhin betrifft die Erfindung einen neuartigen Datenträger. Die Erfindung bezieht sich auf Datenträger oder Speichermedien, die nicht linear beschrieben werden müssen.

Speichermedien bzw. Datenträger, die nicht linear beschrieben werden müssen, sind bekannt. Es handelt sich um Disketten, Festplatten, DVD-Medien und dergleichen. Die Erfindung ist unabhängig von dem verwendeten Betriebssystem bzw. Filesystem, die von der Computeranlage verwendet werden, in denen die Datenträger eingesetzt sind.

Es ist bekannt, daß moderne Betriebssysteme und die Grundinstallationen von üblichen Anwendungsprogrammen einen umfangreichen Speicherbereich benötigen. Mehrere hundert Megabyte sind die Regel. Daraus ergibt sich ein zeitlich bedeutender Installationsaufwand, bis alle Komponenten vorschriftsgemäß installiert und aufeinander abgestimmt sind. Bei einem ständig größer werdenden Markt und immer umfangreicheren Anwendungsgebieten für Computer sind auf der Bereitstellungsseite sehr zeitaufwendige Maßnahmen durchzuführen, bis der Datenträger in dem gewünschten Grundzustand eingerichtet ist.

Die bekannten Betriebssysteme und Anwendungsprogramme sind jedoch hinsichtlich der Abstimmung aufeinander vergleichsweise empfindlich. Die steigende Anzahl von Softwareprodukten und mögliche Fehler der Anwender bei der Installation führen häufig zu inkompatiblen Programm- und Datenzuständen.

Die Anwendungen sehen in der Regel nicht vor, zumal nicht alle Fehler sofort bemerkbar werden, die durchgeführte Installation zu 100% wieder rückgängig zu machen, so daß eine vollständige Neuinstallation durchgeführt werden muß. Es ist bekannt, daß der größte Teil von Computer-Reklamationen auf der Inkompatibilität von Anwendungsprogrammen, Daten und dergleichen besteht, und daß die damit entstehenden Kosten für Anwender und für den Handel erheblich sind.

Ausgehend von diesem Stand der Technik liegt der vorliegenden Erfindung die **Aufgabe** zugrunde, ein Verfahren zur Herstellung von Datenträgern sowie Datenträger bereitzustellen, bei welchen die Durchführung von Neuinstallationen weitestgehend reduziert und der Zeitaufwand bei der Wiederherstellung von einem Zustand vor Auftreten von Inkompatibilität minimiert ist.

Verfahrensseitig wird zur technischen **Lösung** dieser Aufgabe vorgeschlagen ein Verfahren zur Herstellung eines Datenträgers mit wiederherstellbarem Basisdatengrundzustand, bei welchem in einem als Nutzdatenbereich vorgesehenen Bereich ein Basisdatengrundzustand hergestellt wird, ein davon getrennter Bereich des Datenträgers als Rücksicherungsbereich festgelegt und vom Nutzdatenbereich eine wiederherstellbare Sicherungskopie auf dem Rücksicherungsbereich aufgebracht wird.

Vorrichtungsseitig basiert die Erfindung auf einem Datenträger, welcher wenigstens einen Nutzdatenbereich und wenigstens einen Rücksicherungsbereich aufweist, wobei auf dem Rücksicherungsbereich eine wiederherstellbare Sicherungskopie des Nutzdatenbereiches herstellbar ist.

Für die Herstellung der Datenträger werden vorzugsweise handelsübliche Datenträger verwendet, die dann mittels des erfinungsgemäßen Verfahrens in bestimmte Zustände versetzt werden. Hierbei ermöglicht nun die Erfindung einen als gewünschten Installationszustand definierten Basisdatengrundzustand in einem vom Nutzdatenbereich vollständig abgetrennten Rücksicherungsbereich des Datenträgers niederzulegen. Wird der Nutzdatenbereich verändert, beispielsweise durch die Installation neuer Anwendungen und dergleichen, und wird ein Zustand erreicht, in welchem der Nutzdatenbereich nicht mehr sinnvoll nutzbar ist, der den Datenträger nutzende Computer also nicht mehr einwandfrei funktioniert, läßt sich auf einfache Weise der im Rücksicherungsbereich niedergelegte Datenbestand auf den Nutzdatenbereich wieder herstellen. Der Nutzdatenbereich erhält damit wieder seinen ursprünglichen Basisdatengrundzustand. Entsprechende Funktionen können in Betriebssysteme integriert werden oder in das sogenannte BIOS eines Computers. Durch geeignete Komprimierverfahren können sowohl die Erstellung der Sicherungskopie als auch der Rücksicherungsvorgang äußerst schnell durchgeführt werden. Dabei wird das sogenannte Sicherungsprotokoll vorzugsweise ebenfalls im Rücksicherungsbereich niedergelegt. Dazu kann auch gehören die entsprechende Komprimier- bzw. Dekomprimiersoftware.

Gemäß einem besonders vorteilhaften Vorschlag der Erfindung wird auf dem Datenträger ein weiterer Bereich festgelegt, in welchem die eigentlichen Kerninformationen für die Datenträgerorganisation niedergelegt sind. Dort sind also die sogenannten Partitionierungsdaten abgelegt, also die Daten, aus denen sich ergibt, wie viele Bereiche in welcher Basisformatierung und zu welchem Zweck existieren.

Das erfindungsgemäße Verfahren ermöglicht somit auch, Datenträger herzustellen, die vorpartitioniert sind und in einem dafür vorgesehenen Rücksicherungsbereich einen Basisdatengrundzustand in Sicherungskopie aufweisen, der bei Einbau und Nutzung des Datenträgers auf den Nutzdatenbereich initialisierend aufgespielt wird. Somit kann der vollständige Datenträger in einem Basisinstallationsmodus geliefert werden, der einen Computer zu einem Gerät mit einem Softwaregrundzustand ergänzt.

Gemäß einen weiteren vorteilhaften Vorschlag der Erfindung werden Fehlerkontrolldaten erzeugt und gespeichert, mittels welchen ermöglicht ist, festzustellen, ob die Herstellung einer Sicherungskopie und/oder die Rücksicherung erfolgreich waren. Zu diesem Zweck werden Checknummem generiert, anhand derer sich Rückschreibfehler oder Zerstörungen im Rücksicherungsbereich erkennen lassen. Auch ist es möglich, entstehende Rückschreibfehler oder Zerstörungen im Rücksicherungsbereich unter Verwendung der Fehlerwerte zu korrigieren.

Die Erfindung schafft insbesondere im Massen-Vertriebsgeschäft von Computern Vorteile und neue Möglichkeiten. Auch nicht sachkundige Käufer sind nun in die Lage versetzt, ihren Computer in einen Auslieferungszustand zurückzuversetzen, wenn vorher nicht behebbare Treiber- oder sonstige Softwareprobleme aufgetreten sind. Damit werden die Reklamationen auf ein Minimum reduziert und es wird die Installationsfreudigkeit und Installationssichheit auf der Bedienerseite erhöht. Beispielhaft können bis zu 50% Platz eines Datenträgers für einen Rücksicherungsbereich reserviert werden. Es ist aber auch möglich, einen kleineren Bereich festzulegen, auf welchem Daten komprimiert aufgebracht werden. Vorzugsweise entsteht am Ende eines Datenträgers ein datenfreier Bereich. Im letzten Datenblock kann die sogenannte Signatur angelegt werden, der neben der Eigenerkennung beispielsweise Daten wie die Partitionierung, Datengültigkeit und dergleichen entnommen werden können. Es werden dann die einzelnen Datenblöcke von hinten nach vorn in komprimierter Weise mit der Sicherungskopie beschrieben. Der Rücksicherungsbereich ist vorzugsweise als eine Partition identifiziert, welche den Betriebssystemen nicht zur Verfügung steht. Somit wird auch ein unerwünschtes oder unbeabsichtigtes Beschreiben dieses Bereiches vermieden. Während der Herstellung der Sicherung wird eine Prüfsumme der Daten berechnet und ebenfalls in den letzten Datenblock eingetragen.

Für die Rücksicherung wird zunächst die Signatur ausgelesen und es werden dann die einzelnen Datenblöcke, gegebenenfalls entkomprimierend, von vorn nach hinten auf den Nutzdatenbereich des Datenträgers rückgeschrieben. Dieses Rückschreiben wird mit der ermittelten Prüfsumme kontrolliert.

Eine mögliche Verfeinerung des Verfahrens besteht darin, die Daten auf defragmentierte Daten zu testen und, je nach Betriebssystem bzw. Filesystem eine Defragmentierung der Daten durchzuführen.

Weitere Vorteile und Merkmale der Erfindung ergeben sich aus der folgenden Beschreibung anhand der Figuren. Dabei zeigen:
- Fig. 1: ein Flußdiagramm für einen beispielhaften Ablauf der Erstellung einer Sicherungskopie und

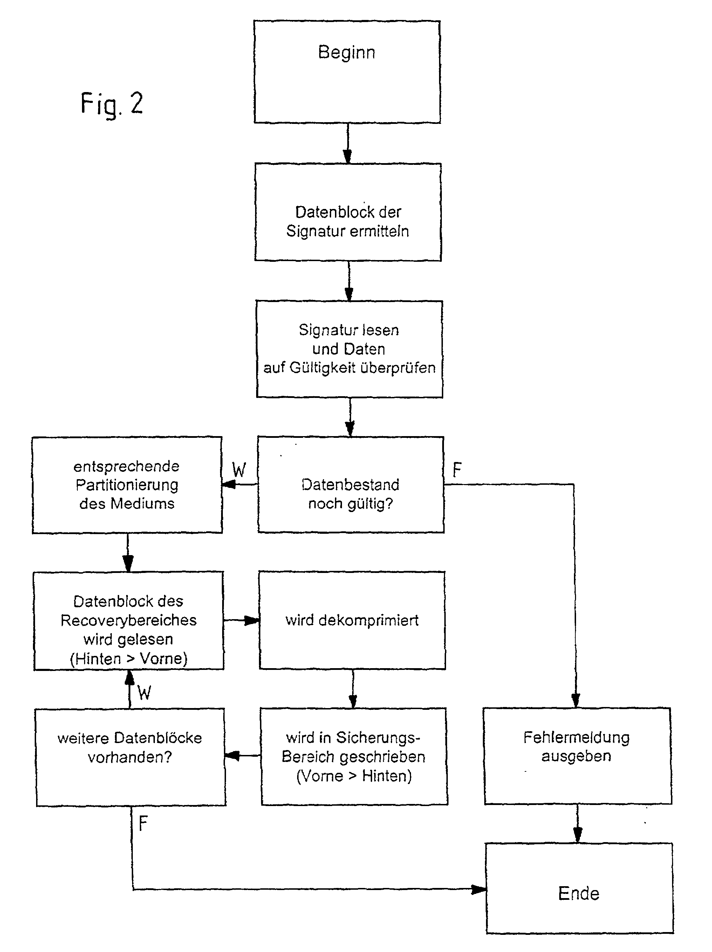

- Fig. 2: ein Flußdiagramm für einen beispielhaften Ablauf einer Rücksicherung.

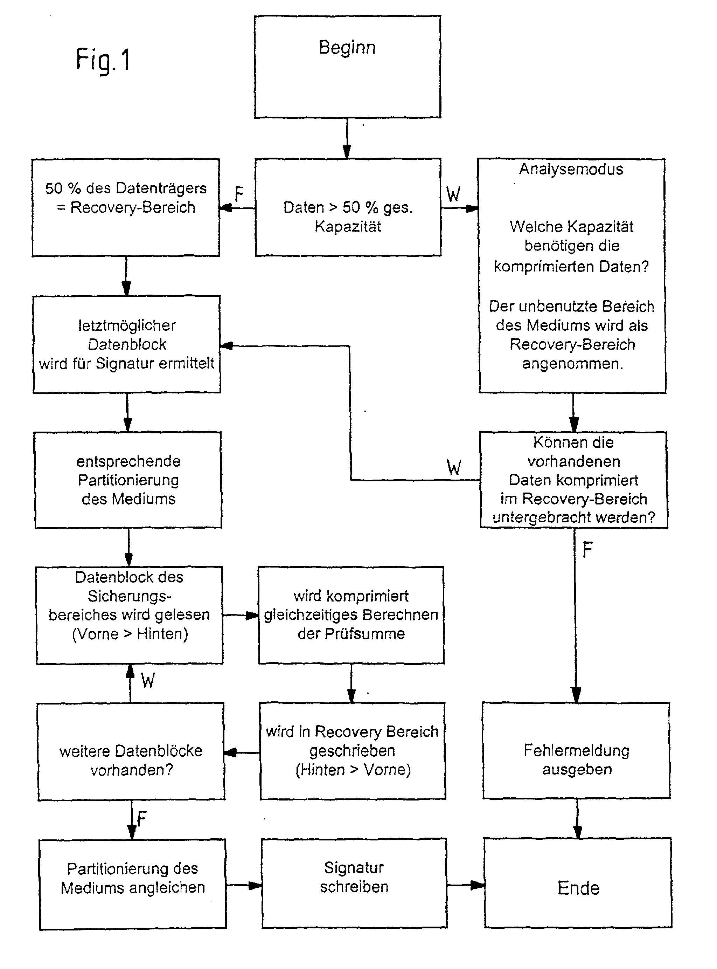

Gemäß Fig. 1 wird zunächst festgestellt, ob die zu sichernden Daten mehr als 50% der Gesamtkapazität des Datenträgers ausmachen. Ist dies der Fall, kann im Analysemodus festgestellt werden, welche Kapazität die Daten in komprimierter Form benötigen würden. Es wird dann der unbenutzte Bereich des Datenträgers als Rücksicherungsbereich festgelegt. Es wird dann geprüft, ob die vorhandenen Daten in komprimierter Form im Rücksicherungsbereich untergebracht werden können. Ist dies nicht der Fall, wird eine Fehlermeldung ausgegeben und das Verfahren ist beendet.

War bei der ersten Prüfung, ob die Daten mehr als 50% der Gesamtkapazität ausmachen, negativ, so werden beispielsweise 50% des Datenträgers als Rücksicherungsbereich festgelegt. Es wird dann der letztmögliche Datenblock für die Signatur ermittelt.

Nach dem auf die eine oder andere Weise der letztmögliche Datenblock für die Signatur ermittelt wurde, erfolgt die entsprechende Partitionierung des Datenträgers und aus dem Nutzdatenbereich wird ein Datenblock gelesen, unter gleichzeitiger Berechnung der Prüfsumme komprimiert und in den Rücksicherungsbereich geschrieben. Das Datenblocklesen erfolgt von vorne nach hinten, das Schreiben in den Rücksicherungsbereich von hinten nach vorne. Dieses Verfahren wird solange wiederholt, wie noch weitere Datenblöcke im Nutzdatenbereich vorhanden sind. Wurde der letzte Datenblock gelesen, komprimiert und gesichert, wird die Partitionierung des Datenträgers angeglichen, die Signatur geschrieben und das Verfahren ist beendet. Es existiert nun ein Datenträger mit einem Nutzdatenbereich, einem davon abgetrennten, durch Partitionierung separierten, Rücksicherungsbereich und einem Signaturbereich.

Zur Erstellung einer Rücksicherung wird zunächst der Datenblock der Signatur ermittelt, die Signatur gelesen und es werden die Daten auf Gültigkeit überprüft. Ist der Datenbestand nicht mehr gültig, ist das Verfahren nach Abgabe einer Fehlermeldung beendet. Ist der Datenbestand gültig, erfolgt die Partitionierung des Datenträgers. Der Datenblock des Rückspeicherungsbereichs wird gelesen, und zwar werden die Datenblöcke von hinten nach vorne einzeln gelesen, dekomprimiert und von vorne nach hinten in den Nutzdatenbereich geschrieben. Dieses Verfahren wird durchgeführt, solange noch gesicherte Datenblöcke existieren. Anschließend ist das Verfahren beendet. Es existiert nun wieder der gleiche Datenträger mit einem vollständig neuen, rückgesicherten Nutzdatenbereich, einem Rücksicherungsbereich mit der Sicherungskopie und der Signatur.

Das beschriebene Ausführungsbeispiel dient nur der Erläuterung und ist nicht beschränkend.

## Patentansprüche

1. Verfahren zur Herstellung eines Datenträgers mit wiederherstellbarem Basisdatengrundzustand, bei welchen in einem als Nutzdatenbereich vorgesehenen Bereich ein Basisdatengrundzustand hergestellt wird, ein davon getrennter Bereich des Datenträgers als Rücksicherungsbereich festgelegt und vom Nutzdatenbereich eine wiederherstellbare Sicherungskopie auf dem Rücksicherungsbereich aufgebracht wird.

2. Verfahren nach Anspruch 1, **dadurch gekennzeichnet, daß** der ursprüngliche Basisdatengrundzustand durch Rückspeicherung der im Rücksicherungsbereich niedergelegten Daten auf den Nutzdatenbereich vollständig wiederherstellbar ist.

3. Verfahren nach einem der vorhergehenden Ansprüche, **dadurch gekennzeichnet, daß** durch Neudefinition eines Basisdatengrundzustandes die Ausbildung einer wiederherstellbaren Sicherungskopie wiederholbar ist.

4. Verfahren nach einem der vorhergehenden Ansprüche, **dadurch gekennzeichnet, daß** der Rücksicherungsbereich gegen unbeabsichtigtes Beschreiben mit Daten gesperrt wird.

5. Verfahren nach einem der vorhergehenden Ansprüche, **dadurch gekennzeichnet, daß** auf dem Rücksicherungsbereich das Protokoll für die Herstellung der Sicherungskopie gespeichert wird.

6. Verfahren nach einem der vorhergehenden Ansprüche, **dadurch gekennzeichnet, daß** ein weiterer Datenträgerbereich festgelegt und mit den Adress- und Größeninformationen zumindest des Rücksicherungsbereiches versehen wird.

7. Verfahren nach einem der vorhergehenden Ansprüche, **dadurch gekennzeichnet, daß** bei der Herstellung der Sicherungskopie Prüfdaten für die Fehlerfeststellung und Fehlerkorrektur ermittelt und gespeichert werden.

8. Verfahren nach einem der vorhergehenden Ansprüche, **dadurch gekennzeichnet, daß** die Daten bei der Herstellung der Sicherungskopie komprimiert werden.

9. Verfahren nach einem der vorhergehenden Ansprüche, **dadurch gekennzeichnet, daß** als Basisdatengrundzustand Datenbestände gesichert werden.

10. Verfahren nach einem der vorhergehenden Ansprüche, **dadurch gekennzeichnet, daß** als Basisdatengrundzustand Betriebssystemdaten gesichert werden.

11. Datenträger, hergestellt nach dem Verfahren nach wenigstens einem der Ansprüche 1 bis 10, **dadurch gekennzeichnet, daß** dieser wenigstens einen Nutzdatenbereich und wenigstens einen Rücksicherungsbereich aufweist, wobei auf dem Rücksicherungsbereich eine wiederherstellbare Sicherungskopie des Nutzdatenbereiches herstellbar ist.

## Claims

1. Method for producing a data carrier with a recoverable basic data initial state, in which a basic data initial state is produced in an area provided as useful data area, a data carrier area that is separate from this is defined as recovery area and, from the useful data area, a recoverable backup copy is applied on the recovery area.

2. Method according to Claim 1, **characterized in that** the original basic data initial state can be completely recovered by restoring the data stored in the recovery area on the useful data area.

3. Method according to one of the preceding claims, **characterized in that** the formation of a recoverable backup copy can be repeated by redefinition of a basic data initial state.

4. Method according to one of the preceding claims, **characterized in that** the recovery area is blocked against data being written to it unintentionally.

5. Method according to one of the preceding claims, **characterized in that** the protocol for producing the backup copy is stored on the recovery area.

6. Method according to one of the preceding claims, **characterized in that** a further data carrier area is defined and provided with the address and size information of at least the recovery area.

7. Method according to one of the preceding claims, **characterized in that**, during the production of the backup copy, check data for error detection and error correction are determined and stored.

8. Method according to one of the preceding claims, **characterized in that** the data are compressed during the production of the backup copy.

9. Method according to one of the preceding claims, **characterized in that** stocks of data are backed up as basic data initial state.

10. Method according to one of the preceding claims, **characterized in that** operating system data are backed up as basic data initial state.

11. Data carrier, produced according to the method according to at least one of Claims 1 to 10, **characterized in that** it has at least one useful data area and at least one recovery area, a recoverable backup copy of the useful data area being able to be produced on the recovery area.

## Revendications

1. Procédé destiné à la fabrication d'un support de données avec un état initial de données de base pouvant être reconstitué, dans lequel un état initial de données de base est réalisé dans une zone prévue en tant que zone de données utiles, une zone du support de données séparée de cette dernière est définie en tant que zone de sauvegarde de récupération, et une copie de sauvegarde pouvant être reconstituée est enregistrée par la zone de données utiles dans la zone de sauvegarde de récupération.

2. Procédé selon la revendication 1, **caractérisé en ce que** l'état initial des données de base peut être entièrement reconstitué par une mémorisation en retour dans la zone de données utiles des données enregistrées dans la zone de sauvegarde de récupération.

3. Procédé selon l'une quelconque des revendications précédentes, **caractérisé en ce que** l'établissement d'une copie de sauvegarde pouvant être reconstituée peut être répété par une nouvelle définition d'un état initial de données de base.

4. Procédé selon l'une quelconque des revendications précédentes, **caractérisé en ce que** la zone de sauvegarde de récupération est protégée contre un enregistrement non intentionnel de données.

5. Procédé selon l'une quelconque des revendications précédentes, **caractérisé en ce que** le protocole pour l'établissement de la copie de sauvegarde est mémorisé dans la zone de sauvegarde de récupération.

6. Procédé selon l'une quelconque des revendications précédentes, **caractérisé en ce qu'**une autre zone de support de données est définie, et renseignée par les informations d'adressage et de grandeurs, au moins de la zone de sauvegarde de récupération.

7. Procédé selon l'une quelconque des revendications précédentes, **caractérisé en ce que** des données de vérification pour la détection d'erreurs et la correction d'erreurs sont déterminées et mémorisées lors de l'établissement de la copie de sauvegarde.

8. Procédé selon l'une quelconque des revendications précédentes, **caractérisé en ce que** les données pour l'établissement de la copie de sauvegarde sont compressées.

9. Procédé selon l'une quelconque des revendications précédentes, **caractérisé en ce que** des états existants de données sont sauvegardés en tant qu'état initial de données de base.

10. Procédé selon l'une quelconque des revendications précédentes, **caractérisé en ce que** des données de système d'exploitation sont sauvegardées en tant qu'état initial de données de base.

11. Support de données fabriqué d'après le procédé selon l'une au moins des revendications 1 à 10, **caractérisé en ce que** celui-ci comporte au moins une zone de données utiles, et au moins une zone de sauvegarde de récupération, une copie de sauvegarde pouvant être reconstituée de la zone de données utiles pouvant être réalisée dans la zone de sauvegarde de récupération.
